# EUROPEAN PATENT APPLICATION

(11) **EP 2 270 098 A1**
(43) Date of publication of application: **05.01.2011**
(21) Application number: 09725281.1
(22) Date of filing: 23.03.2009
(51) Int. Cl.: C08L 77/00, C08J 5/18, C08K 3/34, C08K 5/09, C08K 9/06

(54) **POLYAMIDE RESIN COMPOSITION FOR FILM**

(30) Priority: 27.03.2008 JP 2008084299
(71) Applicant: Ube Industries, Ltd., Ube-shi Yamaguchi 755-8633 (JP)
(72) Inventor: HARA, Yoshitomo, Ube-shi Yamaguchi 755-8633 (JP); YAMAGUCHI, Yutaka, Ube-shi Yamaguchi 755-8633 (JP)
(74) Representative: Hoeger, Stellrecht & Partner Patentanwälte
(86) International application number: PCT/JP2009/056404
(87) International publication number: WO 2009/119860

(57) **Abstract**

In order to obtain a polyamide resin composition for a film, ensuring that various properties inherent in the film composed of a polyamide resin are maintained, the transparency, alipperiness and printability are excellent, the generation of rupture on stretching is reduced, and the continuous productivity is good, a polyamide resin composition for film, obtained by blending from 0.01 to 0.2 parts by mass of (A) an inorganic filler particle surface-treated with organopolysiloxane and from 0.003 to 0.1 parts by mass of (B) a magnesium salt of a hydroxy fatty acid, per 100 parts by mass of the polyamide resin is provided.

## Description

### CROSS-REFERENCE TO RELATED APPLICATIONS

This application is based upon and claims the benefit of priority from Japanese Patent Application No. 2008-84299, filed on March 27, 2008, the contents of which are incorporated herein by reference.

### TECHNICAL FIELD

The present invention relates to a polyamide resin composition for a film, ensuring that generation of a rupture when stretching can be prevented and at the same time, providing excellent transparency, slipperiness and printability.

### BACKGROUND ART

A polyamide film is excellent in the gas barrier property, toughness, and mechanical and thermal properties. Accordingly, the polyamide resin is being used as a packaging film, particularly in the food packaging field, as a base material of a single-layer film or a laminate film, and further used in various fields as a constituent material of a laminate film formed by co-extrusion with other resins. In view of productivity or quality/commercial value of the film, the slipperiness of the polyamide film is one of important requisite characteristics. Slipperiness results in problems in the workability after-processing, i.e., the film may jam during bag-making or misregistration of the ink may occur when multicolor printing.

In order to improve the slipperiness of such a polyamide film, for example, a method of blending an inorganic filler particle (see, Kokoku (Japanese Examined Patent Publication) No. 54-4741) or a method of blending a polyethylene (see, Kokoku No. 53-45226) has been proposed.

However, in the method of blending a polyethylene, poor affinity of the polymer for the polyamide resin incurs serious deterioration of the film transparency and at the same time, causes a great decrease in the excellent mechanical strength characteristic of the polyamide film.

Also, in the method of improving the slipperiness by blending an inorganic filler particle, the blending amount is disadvantageously restricted, because use of a sufficient amount of inorganic filler particles may enable obtaining a film imparted with satisfactory slipperiness but blending in an excessively large amount hinders uniform dispersion of inorganic filler particles in the film and incurs serious reduction in the transparency characteristic of the polyamide film, as a result, the commercial value is impaired.

Moreover, in the method of blending an inorganic particle, a particulate defect referred to as a fish eye or a streaky appearance failure referred to as die line may be produced, or accumulation of a degraded polymeric material or additive aggregate in the die lip opening is accelerated, making it difficult to stably produce a high-quality film with excellent appearance. Furthermore, blending of an inorganic filler requires frequent shut down of the extruder to clean the die lip opening, and it is forced to reduce the production efficiency.

On the other hand, there have been proposed various methods for reducing the die line or Die-build-up without impairing the slipperiness, i.e., a method of blending an inorganic filler particle and a magnesium salt of hydroxy fatty acid (see, Kokai No. 6-179813) and a method of blending an inorganic filler particle and a mixture of zinc oxide and a basic fatty acid magnesium (see, Kokai No. 8-73734). However, the former has a drawback that the effect of suppressing the generation of die line or Die-build-up by the magnesium salt of hydroxy fatty acid is poor and in order to obtain a satisfactory result, blending of the magnesium salt of hydroxy fatty acid in a fairly large amount is actually required, which gives rise to impairment of printability. In the latter case, improvement by the mixture of zinc oxide and a basic fatty acid magnesium brings about an effect of suppressing the generation of die line but is poor in the effect of preventing the formation of Die-build-up due to the long-time operation of a film production machine, and its practical use has a problem. Also, these patent publications are silent on the effect of preventing rupture on stretching. A polyamide film enabling continuous and stable production for a long period of time and at the same time, being excellent in the transparency, slipperiness and printability is industrially unavailable at present.

### SUMMARY OF THE INVENTION

An object of the present invention is to obtain a polyamide resin composition for a film, ensuring that various properties inherent in the film composed of a polyamide resin are maintained, the transparency, slipperiness and printability are excellent, the generation of rupture on stretching is reduced, and the continuous productivity is good.

As a result of intensive studies to develop a polyamide resin composition for a film capable of solving those problems, the present inventors have found that the above-described object can be attained by a polyamide film formed of a resin composition having blended therein an inorganic filler particle surface-treated with an organopolysiloxane and a magnesium salt of a hydroxy fatty acid, and accomplished the present invention. An inorganic filler particle surface-treated with an organopolysiloxane and a hydroxy aliphatic magnesium salt each is known to be blended alone in a polyamide resin composition for a film, but the present inventors have found that when a hydroxy aliphatic magnesium salt and an inorganic filler particle surface-treated with an organopolysiloxane are used in combination in a specific ratio, a surprising synergistic effect is obtained, and accomplished the present invention.

That is, the present invention relates to a polyamide resin composition for a film, comprising 100 parts by mass of the polyamide resin, from 0.01 to 0.2 parts by mass of (A) an inorganic filler particle surface-treated with an organopolysiloxane and from 0.003 to 0.1 parts by mass of (B) a magnesium salt of a hydroxy fatty acid.

The polyamide resin composition of the present invention contains a specific inorganic filler particle and a magnesium salt of a hydroxy fatty acid and therefore, has characteristic features that excellent printability is exhibited while maintaining the transparency and slipperiness and the continuous productivity is excellent because the generation of rupture on stretching is prevented.

### MODE FOR CARRYING OUT THE INVENTION

The present invention is described in detail below.

The polyamide resin composition of the present invention comprises 100 parts by mass of the polyamide resin, from 0.01 to 0.2 parts by mass of (A) an inorganic filler particle surface-treated with an organopolysiloxane and from 0.003 to 0.1 parts by mass of (B) a magnesium salt of a hydroxy fatty acid.

The polyamide resin for use in the present invention is obtained using, as a raw material, a lactam, an aminocarboxylic acid, or a nylon salt composed of a diamine and a dicarboxylic acid, by polymerizing or copolymerizing it by a known method, such as melt polymerization, solution polymerization or solid-phase polymerization.

Examples of the lactam include caprolactam, enatholactam, undecanolactam, dodecanolactam, α-pyrrolidone and α-piperidone. Examples of the aminocarboxylic acid include 6-aminocaproic acid, 7-aminoheptanoic acid, 9-aminononanoic acid, 11-aminoundecanoic acid and 12-aminododecanoic acid. One of these or two or more thereof may be used.

Examples of the diamine constituting the nylon salt include an aliphatic diamine such as ethylenediamine, tetramethylenediamine, pentamethylenediamine, hexamethylenediamine, heptamethylenediamine, octamethylenediamine, nonamethylenediamine, decamethylenediamine, undecamethylenediamine, dodecamethylenediamine, tridecamethylenediamine, tetradecamethylenediamine, pentadecamethylenediamine, hexadecamethylenediamine, heptadecamethylenediamine, octadecamethylenediamine, nonadecamethylenediamine, eicosamethylenediamine, 2/3-methyl-1,5-pentadiamine, 2-methyl-1,8-octanediamine, 2,2,4/2,4,4-trimethylhexamethylenediamine and 5-methyl-1,9-nonanediamine; an alicyclic diamine such as 1,3/1,4-cyclohexanediamine, 1,3/1,4-cyclohexanedimethylamine, bis(4-aminocyclohexyl)methane, bis(4-aminocyclohexyl) propane, bis(3-methyl-4-aminocyclohexyl)methane, bis(3-methyl-4-aminocyclohexyl)propane, 5-amino-2,2,4-trimethyl-1-cyclopentanemethylamine, 5-amino-1,3,3-trimethylcyclohexanemethylamine (isophoronediamine), bis (aminopropyl)piperazine, bis(aminoethyl)piperazine, norbornanedimethylamine and tricyclodecanedimethylamine; and an aromatic diamine, such as paraxylylenediamine and metaxylylenediamine. One of these or two or more thereof may be used.

Examples of the dicarboxylic acid constituting the nylon salt include an aliphatic dicarboxylic acid, such as adipic acid, pimelic acid, suberic acid, azelaic acid, sebacic acid, undecanedicarboxylic acid, dodecanedicarboxylic acid, tridecanedicarboxylic acid, tetradecanedicarboxylic acid, pentadecanedicarboxylic acid, hexadecanedicarboxylic acid, octadecanedicarboxylic acid and eicosanedicarboxylic acid; an alicyclic dicarboxylic acid such as 1,3/1,4-cyclohexanedicarboxylic acid, dicyclohexanemethane-4,4'-dicarboxylic acid and norbornanedicarboxylic acid; and an aromatic dicarboxylic acid such as isophthalic acid, terephthalic acid and 1,4/2,6/2,7-naphthalenedicarboxylic acid. One of these or two or more thereof may be used.

In the present invention, a homopolymer or a copolymer derived from such a lactam, an aminocarboxylic acid or a nylon salt composed of a diamine and a dicarboxylic acid may be used alone, or a mixture thereof may be used.

Specific examples of the polyamide resin used include polycaprolactam (polyamide 6), polyundecanolactam (polyamide 11), polydodecanolactam (polyamide 12), polyethylene adipamide (polyamide 26), polytetramethylene adipamide (polyamide 46), polyhexamethylene adipamide (polyamide 66), polyhexamethylene azelamide (polyamide 69), polyhexamethylene sebacamide (polyamide 610), polyhexamethylene undecamide (polyamide 611), polyhexamethylene dodecamide (polyamide 612), polyhexamethylene terephthalamide (polyamide 6T), polyhexamethylene isophthalamide (polyamide 61), polyhexamethylene hexahydroterephthalamide (polyamide 6T(H)), polynonamethylene adipamide (polyamide 96), polynonamethylene azelamide (polyamide 99), polynonamethylene sebacamide (polyamide 910), polynonamethylene dodecamide (polyamide 912), polynonamethylene terephthalamide (polyamide 9T), polytrimethylhexamethylene terephthalamide (polyamide TMHT), polynonamethylene hexahydroterephthalamide (polyamide 9T(H)), polynonamethylene naphthalamide (polyamide 9N), polydecamethylene adipamide (polyamide 106), polydecamethylene azelamide (polyamide 109), polydecamethylene decamide (polyamide 1010), polydecamethylene dodecamide (polyamide 1012), polydecamethylene terephthalamide (polyamide 10T), polydecamethylene hexahydroterephthalamide (polyamide 10T(N)), polydecamethylene naphthalamide (polyamide 10N), polydodecamethylene adipamide (polyamide 126), polydodecamethylene azelamide (polyamide 129), polydodecamethylene sebacamide (polyamide 1210), polydodecamethylene dodecamide (polyamide 1212), polydodecamethylene terephthalamide (polyamide 12T), polydodecamethylene hexahydroterephthalamide (polyamide 12T(H)), polydodecamethylene naphthalamide (polyamide 12N), polymetaxylylene adipamide (polyamide MXD6), polybis(4-aminocyclohexyl)methane dodecamide (polyamide PACM12), polybis(4-aminocyclohexyl)methane terephthalamide (polyamide PACMT), polybis(4-aminocyclohexyl)methane isophthalamide (polyamide PACMI), polybis(3-methyl-4-aminocyclohexyl)methane dodecamide (polyamidedimethyl PACM12), polyisophorone adipamide (polyamide IPD6), polyisophorone terephthalamide (polyamide IPDT), and a polyamide copolymer using such a raw material monomer. One of these or two or more thereof may be used. In view of heat resistance, mechanical strength and transparency of the film obtained, profitability, easy availability and the like, preferred polyamide resins are polyamide 6, polyamide 12, polyamide 66, a polyamide 6/66 copolymer (a copolymer of polyamide 6 and polyamide 66; hereinafter, the copolymer is denoted in the same manner), a polyamide 6/69 copolymer, a polyamide 6/610 copolymer, a polyamide 6/611 copolymer, a polyamide 6/612 copolymer, a polyamide 6/12 copolymer, a polyamide 6/66/12 copolymer, a polyamide 6/6T copolymer, a polyamide 6/6I copolymer, a polyamide 6/IPD6 copolymer, a polyamide 6/IPDT copolymer, a polyamide 66/6T copolymer, a polyamide 66/6I copolymer, a polyamide 6T/6I copolymer, a polyamide 66/6T/6I copolymer, and polyamide MXD6. Above all, polyamide 6, polyamide 12, polyamide 66, a polyamide 6/66 copolymer, a polyamide 6/12 copolymer, a polyamide 6/IPD6 copolymer, a polyamide 6/IPDT copolymer and a polyamide 6/66/12 copolymer are preferred.

The relative viscosity of the polyamide resin as measured in accordance with JIS K-6920 is preferably from 2.0 to 5.0, more preferably from 2.5 to 4.5. If the relative viscosity of the polyamide resin is less than 2.0, the mechanical property of the obtained polyamide film is sometimes reduced, whereas if it exceeds 5.0, the viscosity at melting becomes high in some cases, making film formation difficult.

Incidentally, the polyamide resin is not particularly limited in the kind of the terminal group and its concentration or molecular weight distribution. In order to adjust the molecular weight or stabilize the melting at the shaping, one of a monoamine, a diamine, a monocarboxylic acid and a dicarboxylic acid may be added or two or more thereof may be added in appropriate combination. Examples thereof include an aliphatic monoamine such as methylamine, ethylamine, propylamine, butylamine, hexylamine, octylamine, decylamine, stearylamine, dimethylamine, diethylamine, dipropylamine and dibutylamine; an alicyclic monoamine such as cyclohexylamine and dicyclohexylamine; an aromatic monoamine such as aniline, toluidine, diphenylamine and naphthylamine; an aliphatic diamine such as tetramethylenediamine, pentamethylenediamine, hexamethylenediamine, nonamethylenediamine, decamethylenediamine and dodecamethylenediamine; an alicyclic diamine such as cyclohexanediamine, methylcyclohexanediamine and isophoronediamine; an aromatic diamine such as metaphenylenediamine, paraphenylenediamine, metaxylylenediamine and paraxylylenediamine; an aliphatic monocarboxylic acid, such as acetic acid, propionic acid, butyric acid, valeric acid, caproic acid, caprylic acid, lauric acid, tridecylic acid, myristic acid, palmitic acid, stearic acid, pivalic acid and isobutyric acid; an alicyclic monocarboxylic acid, such as cyclohexanecarboxylic acid; an aromatic monocarboxylic acid, such as benzoic acid, toluic acid, α-naphthalenecarboxylic acid, β-naphthalenecarboxylic acid, methylnaphthalenecarboxylic acid and phenylacetic acid; an aliphatic dicarboxylic acid such as adipic acid, trimethyladipic acid, pimelic acid, suberic acid, azelaic acid, sebacic acid, undecanedicarboxylic acid and dodecanedicarboxylic acid; an alicyclic dicarboxylic acid such as 1,3-cyclopentanedicarboxylic acid and 1,4-cyclohexanedicarboxylic acid; and an aromatic dicarboxylic acid such as terephthalic acid, isophthalic acid and 1,4/2,6/2,7-naphthalenedicarboxylic acid. One of these or two or more thereof may be used. The amount used of such a molecular weight adjusting agent varies depending on the reactivity of the molecular weight adjusting agent or polymerization conditions but may be appropriately determined such that the polyamide resin finally obtained has a relative viscosity of 2.0 to 5.0.

Furthermore, with respect to the polyamide resin for use in the present invention, the water extraction amount measured in accordance with the measuring method of the content of a low molecular weight material prescribed in JIS K-6920 is preferably 1.0% or less, more preferably 0.5% or less. If the water extraction amount is large, aggressive attachment of an oligomer component to the vicinity of a die occurs and a die line or a fish eye generated due to the attached matter is sometimes liable to cause an appearance failure. Furthermore, the polyamide resin is strong in the hygroscopicity as compared with an olefin resin and when a moisture-absorbed polyamide resin is used, hydrolysis sometimes occurs when melt-extruding the raw material, which allows the generation of an oligomer and in turn, makes it difficult to produce a film. Therefore, the polyamide resin is preferably dried in advance to adjust the percentage of water content to 0.1 mass% or less.

The inorganic filler particle for use in the present invention is (A) an inorganic filler particle surface-treated with an organopolysiloxane.

As long as a polyamide film having formed on the surface thereof a surface protrusion and ensuring excellent slipperiness is obtained, the inorganic filler particle is not particularly limited in its shape and may be in any of powder, particle, flake, plate, fiber, needle, cloth, mat and other shapes, but a particulate or plate-like filler is preferred. The average particle diameter of the inorganic filler particle is preferably from 0.5 to 10 µm. It is preferred to contain substantially no particle having a particle diameter of 10 µm or more. If a particle having a particle diameter of 10 µm or more is contained in a large amount, fish eye gel may be generated to impair the film appearance. Also, even though a slipperiness improving effect may be brought out, the transparency of film is deteriorated in some cases. On the other hand, if the average particle diameter is less than 0.5 µm, secondary aggregation is liable to occur and conversely, fish eye gel may be generated. Also, even if the aggregation can be prevented, an unevenness effect on the film surface can be hardly obtained and the slipperiness may not be improved. Accordingly, in the case where the particle diameter of the inorganic filler particle is improper to the present invention, it is preferred to previously perform a pulverization treatment or classification. In particular, when the average particle diameter is from 1 to 5 µm, a film excellent in the transparency and slipperiness can be obtained and therefore, this is more preferred.

Specific examples of the inorganic filler particle include silica such as gel-type silica, precipitated silica and spherical silica, talc, kaolin, montmorillonite, zeolite, mica, glass flake, wollastonite, potassium titanate, magnesium sulfate, sepiolite, zonolite, aluminum borate, glass bead, calcium silicate, calcium carbonate, titanium oxide, barium sulfate, zinc oxide and magnesium hydroxide. One of these or two or more thereof may be used. Among these, talc, kaolin, zeolite and silica are preferred in view of easy dispersibility.

In particular, silica is more preferred, because the obtained film is excellent in the transparency and slipperiness. Silica is mainly composed of silica dioxide represented by SiO₂·nH₂O, and is roughly classified into two groups, that is, wet-process silica and dry-process silica, depending on the production method thereof. Either silica can be used. The primary particle is a so-called submicron-order particle, and there are a soft silica where the primary particles are aggregated to form a secondary or tertiary particle, and a hard silica where the size of the primary particle is already 1 µm or more. In the case of performing the stretching of a film, a soft silica is still more preferred.

The organopolysiloxane used as a surface-treating agent of the (A) inorganic filler particle includes polydimethylsiloxane such as dimethylpolysiloxane, methylhydrogenpolysiloxane, methylphenylpolysiloxane and various modified polysiloxanes. Examples of the various modified polysiloxanes include an alcohol-modified polysiloxane, an ether-modified polysiloxane, and a fluorine-modified polysiloxane. One of these or two or more thereof may be used. Among these, dimethylpolysiloxane, methylhydrogenpolysiloxane, and methylphenylpolysiloxane are preferred.

The dynamic viscosity at 25°C of the organopolysiloxane is preferably from 5 to 1,000 cSt, more preferably from 8 to 600 cSt. If the dynamic viscosity is less than 5 cSt, the ignition point lowers and at the same time, decomposition readily occurs, as a result, it is sometimes difficult to process at a high temperature. On the other hand, if the dynamic viscosity exceeds 1,000 cSt, the inorganic filler particle surface cannot be uniformly treated and a coarse aggregated particle may be liable to be generated.

The amount of the organopolysiloxane added is preferably from 0.5 to 15 parts by mass, more preferably from 1 to 12 parts by mass, still more preferably from 2 to 10 parts by mass, per 100 parts by mass of the inorganic filler particle (on a dry basis). If the amount of the organopolysiloxane added is less than 0.5 parts by mass, the effect of preventing the rupture on stretching is low and good continuous productivity may not be obtained, whereas if it exceeds 15 parts by mass, the affinity of the polyamide resin for the inorganic filler particle is insufficient and not only the dispersibility is changed for the worse but also the mechanical property of the finally obtained polyamide film may be impaired or a problem such as bleed-out of the organopolysiloxane to the film surface may occur.

The method for treating the inorganic filler particle with an organopolysiloxane is not particularly limited, but examples thereof include a wet processing method where the inorganic filler particle and organopolysiloxane are added in a solvent and uniformly mixed using a high shear force mixer such as Henschel mixer and super mixer and the solvent is then removed, thereby performing the surface treatment, and a dry processing method where an organopolysiloxane is added when pulverizing the inorganic filler particle by a fluid energy pulverizer such as micronizer, jet mill and Henschel mixer and the mixture is uniformized by stirring and then dried at a predetermined temperature. As for the fluid, compressed air, heated compressed air, steam or the like is normally used.

In particular, when the surface-treated inorganic filler particle is dried under heating after or during the surface treatment, the hydrophobic surface is more strengthened and in turn, the water content due to moisture adsorption or the like is greatly reduced. The thus-obtained surface-treated inorganic filler particle with a low water content involves little deterioration of the resin when kneaded and dispersed in the resin, and this provides various advantages such as improvement of dispersion force or dispersion time.

The blending amount of the (A) inorganic filler particle surface-treated with an organopolysiloxane is from 0.01 to 0.2 parts by mass, preferably from 0.03 to 0.18 parts by mass, more preferably from 0.05 to 0.15 parts by mass, per 100 parts by mass of the polyamide resin. If the blending amount is less than 0.01 parts by mass, the effect of improving the slipperiness of the obtained film is low, whereas if the blending amount exceeds 0.2 parts by mass, the transparency, appearance or the like of the polyamide film is impaired.

The (B) magnesium salt of a hydroxy fatty acid is a salt of a hydroxy saturated or unsaturated fatty carboxylic acid and magnesium and can be obtained by the direct reaction under heating of a hydroxy saturated or unsaturated fatty carboxylic acid and an oxide or hydroxide of magnesium. At this time, when an oxide or hydroxide of magnesium is added in excess, a magnesium hydroxy fatty acid with a high basicity can be obtained, and use thereof produces good results. Examples of the magnesium salt of a hydroxy saturated or unsaturated fatty acid include magnesium hydroxylaurate, magnesium hydroxymyristate, magnesium hydroxypalmitate, magnesium hydroxystearate and magnesium hydroxybehenate. One of these or two or more thereof may be used. If the carbon number of the fatty acid is small, a predetermined effect is sometimes not obtained, whereas if the carbon number is too large, the transparency may be deteriorated. The carbon number is preferably from 12 to 30, more preferably from 12 to 24.

The blending amount of the (B) magnesium salt of hydroxy fatty acid is from 0.003 to 0.1 parts by mass, preferably from 0.004 to 0.08 parts by mass, more preferably from 0.005 to 0.07 parts by mass, per 100 parts by mass of the polyamide resin. If the blending amount is less than 0.003 parts by mass, the effect of improving the appearance or preventing the rupture on stretching is low, whereas if the blending amount exceeds 0.1 part by mass, the transparency, printability or the like of the polyamide film is impaired.

Examples of the method for adding the (A) inorganic filler particle surface-treated with an organopolysiloxane or the (B) magnesium salt of a hydroxy fatty acid to the polyamide resin include an inpolymerization addition method of adding the filler or salt at an arbitrary stage in the polymerization step of the polyamide resin, a so-called master batch method where the (A) inorganic filler particle surface-treated with an organopolysiloxane or the (B) magnesium salt of a hydroxy fatty acid, which is in a high concentration, is previously kneaded into the polyamide resin by using a single-screw or twin-screw extruder and the kneaded product is used by diluting it at the molding, and a dry blend method of adding a predetermined amount of (A) an inorganic filler particle surface-treated with an organopolysiloxane or (B) a magnesium salt of a hydroxy fatty acid to the polyamide resin at the molding. The (A) inorganic filler particle surface-treated with an organopolysiloxane and the (B) magnesium salt of a hydroxy fatty acid may be blended with the polyamide resin simultaneously or separately.

In the present invention, (C) an inorganic filler particle other than (A), that is, an inorganic filler particle surface-untreated with an organopolysiloxane, which is an inorganic filler particle having a specific surface area of 200 m²/g or less, is preferably further blended from the standpoint of improving the slipperiness. Examples of the (C) inorganic filler particle are the same as those exemplified above, but the (C) inorganic filler particle is preferably silica and/or kaolin and/or zeolite. Also, the specific surface area of the (C) inorganic filler particle other than (A) is preferably 200 m²/g or less, more preferably 180 m²/g or less, still more preferably 160 m²/g or less. If the specific surface area exceeds 200 m²/g, generation of voids on stretching or breakage on stretching is reduced, but Die-build-up due to a secondary aggregate is disadvantageously often produced. Incidentally, the specific surface area indicates the value measured by the BET method.

As for the (C) inorganic filler particle, an inorganic filler particle surface-treated with a surface treating agent other than an organopolysiloxane, such as a silane coupling agent, may also be used. Examples of the silane coupling agent include an alkoxysilane compound generally containing an amino group, an epoxy group, a mercapto group, an isocyanate group or a hydroxyl group. Specific examples thereof include an amino group-containing alkoxysilane compound such as γ-aminopropyltrimethoxysilane, γ-aminopropyltriethoxysilane, N-phenyl-γ-aminopropyltrimethoxysilane, N-β-(aminoethyl)-γ-aminopropyltrimethoxysilane, N-β-(aminoethyl)-γ-aminopropyltriethoxysilane, γ-aminodithiopropyltrihydroxysilane, γ-(polyethyleneamino)propyltrimethoxysilane, N-β-(aminopropyl)-γ-aminopropylmethyldimethoxysilane, N-(trimethoxysilylpropyl)ethylenediamine and γ-dibutylaminopropyltrimethoxysilane; a ureido group-containing alkoxysilane compound such as γ-ureidopropyltriethoxysilane, γ-ureidopropyltrimethoxysilane and γ-(2-ureidoethyl)aminopropyltrimethoxysilane; an epoxy group-containing alkoxysilane compound such as γ-glycidoxypropyltrimethoxysilane, γ-glycidoxypropyltriethoxysilane and β-(3,4-epoxycyclohexyl)ethyltrimethoxysilane; a mercapto group-containing alkoxysilane compound such as γ-mercaptopropyltrimethoxysilane and γ-mercaptopropyltriethoxysilane; an isocyanate group-containing alkoxysilane compound such as γ-isocyanatopropyltriethoxysilane, γ-isocyanatopropyltrimethoxysilane, γ-isocyanatopropylmethyldimethoxysilane, γ-isocyanatopropylmethyldiethoxysilane, γ-isocyanatopropylethyldimethoxysilane, γ-isocyanatopropylethyldiethoxysilane and γ-isocyanatopropyltrichlorosilane; and a hydroxyl group-containing alkoxysilane compound such as γ-hydroxypropyltrimethoxysilane and γ-hydroxypropyltriethoxysilane. One of these or two or more thereof may be used. Among these, an amino group-containing alkoxysilane compound such as γ-(2-aminoethyl)aminopropylmethyldimethoxysilane, γ-(2-aminoethyl)aminopropyltrimethoxysilane and γ-aminopropyltrimethoxysilane is preferred.

The amount of the silane coupling agent added is preferably from 1 to 10 parts by mass, more preferably from 2 to 8 parts by mass, still more preferably from 3 to 7 parts by mass, per 100 parts by mass of the inorganic filler particle (on a dry basis). If the amount of the silane coupling agent added is less than 1 part by mass, the affinity of the inorganic filler particle for the polyamide resin becomes insufficient and the dispersibility is reduced, whereas if it exceeds 10 parts by mass, even when the amount added is increased, not only the effect of enhancing the dispersibility is scarcely increased but also the mechanical property of the finally obtained polyamide film may be impaired or a problem such as bleed-out of the silane coupling agent to the film surface may occur.

The method for treating the inorganic filler particle with the silane coupling agent is not particularly limited, but examples thereof include a dry processing method where the silane coupling agent or a silane coupling agent solution is added dropwise or added by spraying to the inorganic filler particle and the mixture is uniformized by stirring by means of an appropriate apparatus such as Henschel mixer and then dried at a predetermined temperature, and a wet processing method where the inorganic filler particle is slurried by dispersing it in water or the like and after adding the silane coupling agent thereto while stirring the slurry, dehydration and drying are preformed.

The blending amount of the (C) inorganic filler particle other than (A), which is an inorganic filler particle having a specific surface area of 200 m²/g or less, is preferably from 0.01 to 0.2 parts by mass, more preferably from 0.03 to 0.18 parts by mass, still more preferably from 0.05 to 0.15 parts by mass, per 100 parts by mass of the polyamide resin. If the blending amount is less than 0.01 parts by mass, the effect of improving the slipperiness of the obtained film may be low, whereas if the blending amount exceeds 0.2 parts by mass, the transparency, appearance or the like of the polyamide film is sometimes impaired.

In the present invention, (D) a bisamide compound is preferably further blended from the standpoint of improving the transparency and slipperiness.

The (D) bisamide compound is a compound represented by the following formula (1) and/or formula (2), wherein R¹ represents a divalent hydrocarbon residue, each of R² and R³ represents a monovalent hydrocarbon residue, and each of R⁴ and R⁵ represents a hydrogen atom or a monovalent hydrocarbon residue.

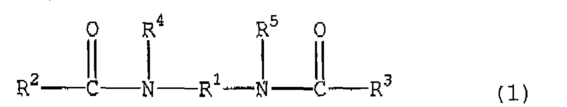

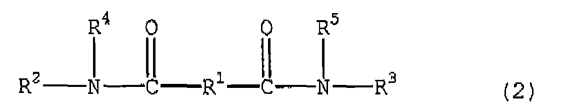

The (D) bisamide compound represented by formula (1) is obtained by the reaction of a diamine and a monocarboxylic acid, and representative examples thereof include an alkylene bis-fatty acid amide and an arylene bis-fatty acid amide. Examples of the raw material diamine include an alkylene diamine such as ethylenediamine, propylenediamine, tetramethylenediamine, hexamethylenediamine, heptamethylenediamine, octamethylenediamine, nonamethylenediamine, decamethylenediamine, undecamethylenediamine and dodecamethylenediamine; an arylene diamine such as phenylenediamine and naphthalenediamine; and an arylenealkyl diamine such as xylylenediamine. One of these or two or more thereof may be used. Examples of the raw material monocarboxylic acid include stearic acid, hexanoic acid, octanoic acid, decanoic acid, lauric acid, myristic acid, palmitic acid, arachidic acid, behenic acid, oleic acid, elaidic acid and montanic acid. One of these or two or more thereof may be used. The (D) bisamide compound represented by formula (1) is preferably N,N'-methylene bis-stearic acid amide, N,N'-ethylene bis-stearic acid amide or N,N'-ethylene bisbehenic acid.

The (D) bisamide compound represented by formula (2) is obtained by the reaction of a monoamine and a dicarboxylic acid, and representative examples thereof include a dioctadecyl dibasic acid amide. Examples of the raw material monoamine include an alkylamine such as ethylamine, methylamine, butylamine, hexylamine, decylamine, pentadecylamine, octadecylamine and dodecylamine; an arylamine such as aniline and naphthylamine; an aralkylamine such as benzylamine; and a cycloalkylamine such as cyclohexylamine. One of these or two or more thereof may be used. Examples of the raw material dicarboxylic acid include terephthalic acid, p-phenylenedipropionic acid, succinic acid and adipic acid. One of these or two or more thereof may be used.

The (D) bisamide compound represented by formula (2) is preferably N,N'-dioctadecyl adipic acid amide.

As for the (D) bisamide compound, one kind of a bisamide compound or two or more kinds of bisamide compounds can be used.

The blending amount of the (D) bisamide compound is preferably from 0.01 to 0.5 parts by mass, more preferably from 0.02 to 0.3 parts by mass, still more preferably from 0.03 to 0.2 parts by mass, per 100 parts by mass of the polyamide resin. If the blending amount is less than 0.01 parts by mass, the effect of improving the transparency and slipperiness of the obtained film may be low, whereas if the blending amount exceeds 0.5 parts by mass, printability of the film or adherence at the lamination processing is sometimes deteriorated.

The polyamide resin composition of the present invention may contain, for example, a heat stabilizer, an antioxidant, an ultraviolet absorber, an ant-weathering agent, a lubricant, a filler, a nucleating agent, a plasticizer, a blowing agent, an anti-blocking agent, an antifogging agent, a flame retardant, a dye, a pigment, a stabilizer, a coupling agent and an impact resistance improver within the range not impairing the properties of the film obtained.

In the present invention, a film is produced using a polyamide resin composition for a film, comprising the above-described polyamide resin, (A) an inorganic filler particle surface-treated organopolysiloxane and (B) a magnesium salt of a hydroxy fatty acid, by applying a known film production method, whereby a polyamide film is obtained. Examples of the method therefor include a casting method where the polyamide resin composition for a film is melt-kneaded by an extruder, extruded into a flat film shape from a T-die or coat hanger die, cast on a casting roll surface and then cooled to produce a film, and a tubular method where a tubular film obtained by melt-extrusion into a tubular shape from a ring die is cooled with air or water to produce a film. The produced film can be used as a substantially unoriented unstretched film, but in view of strength and gas barrier property of the obtained film, a biaxially stretched film is preferred.

The unstretched film obtained can be stretched by a conventionally known industrial method. Examples of the method for stretching a film produced by the casting method include a simultaneous biaxial stretching method where the unstretched sheet is stretched successive biaxial stretching method at the same time by a tenter-type simultaneous biaxial stretching machine, and a sequential biaxial stretching method where the unstretched film melt-extruded from a T-die is stretched in the machine direction by a roll-type stretching machine and then stretched in the transverse direction by a tenter-type stretching machine. Examples of the method for stretching a tubular sheet shaped using an annular die include a tubular stretching method of stretching the tubular sheet in the machine and transverse directions at the same time by inflation under a gas pressure. The stretching step may be performed continuously subsequently to the production of the polyamide film, or the stretching may be performed as a separate step after once taking up the polyamide film.

The stretch ratio of the stretched film varies depending on the usage and application, but in the tenter-type biaxial stretching method and the tubular method, usually, the stretch ratio in both the machine direction and the transverse direction is preferably from 1.5 to 4.5 times, more preferably from 2.5 to 4.0 times. The stretching temperature is preferably from 30 to 210°C, more preferably from 50 to 200°C.

The film stretched by the method above is preferably subjected to a subsequent heat treatment. Thanks to the heat treatment, dimensional stability at ordinary temperature can be imparted. In this case, the heat treatment temperature is selected from the range where the lower limit is 110°C and the upper limit is a temperature 5°C lower than the melting point of the raw material polyamide resin composition. Within this range, a stretched film exhibiting good dimensional stability at ordinary temperature and having an arbitrary heat shrinkage rate can be obtained. The polyamide film obtained from the polyamide resin composition of the present invention is preferably lacking in or substantially free of heat shrinkability. Accordingly, as for the conditions for the heat treatment performed after stretching, the heat treatment temperature is preferably 150°C or more, more preferably from 180 to 220°C, and the relaxation ratio is preferably within 20%, more preferably from 3 to 10%, in the transverse direction.

The stretched film that is thoroughly heat-fixed by the heat treatment operation can be cooled and taken up in the usual manner.

Furthermore, in order to enhance the printability, lamination or self-adhesive applicability, the polyamide film obtained from the polyamide resin composition for a film of the present invention can be subjected to a surface treatment such as corona discharge treatment, plasma treatment, flame treatment and acid treatment. The polyamide film after such a treatment can be used in respective end uses, if desired, through a secondary processing step such as printing, lamination, self-adhesive coating and heat sealing.

The polyamide film obtained from the polyamide resin composition for a film of the present invention is excellent in the transparency, slipperiness and printability and has a high utility value by itself, but when other thermoplastic resins are stacked thereon, many properties can be further added. Specifically, the polyamide film can also be used as a laminate film by stacking a thermoplastic resin layer on at least one surface thereof.

In producing the laminate film, another base material is stacked on one surface or both surfaces of the layer composed of the polyamide resin composition for a film, and examples of the stacking method include a co-extrusion method, an extrusion-lamination method and a dry lamination method. The co-extrusion method is a method of co-extruding the polyamide resin composition for a film and another thermoplastic resin, and examples thereof include co-extrusion sheet molding, co-extrusion casting film molding and co-extrusion inflation film molding. The extrusion-lamination method is a method where an anchor coat agent is coated on each of the polyamide film composed of the polyamide resin composition for a film of the present invention and a base film such as thermoplastic resin film and dried and the thermoplastic resin or the like that is being melt-extruded at the same time is cooled between rolls and press-bonded by applying a pressure to obtain a laminate film. The dry lamination method is a method where a known adhesive such as an organic titanium compound, an isocyanate compound, a polyester-based compound and a polyurethane compound is coated on the polyamide film of the present invention and after drying, laminated together with a base film such as a thermoplastic resin film to obtain a laminate film. The film after lamination can be increased in the adhesive strength by aging the film. In performing lamination, the polyamide film is preferably used after subjecting one surface or both surfaces thereof to a corona treatment.

Examples of the thermoplastic resin stacked include a polyolefin-based resin such as high-density polyethylene (HDPE), medium-density polyethylene (MDPE), low-density polyethylene (LDPE), linear low-density polyethylene (LLDPE), ultrahigh molecular weight polyethylene (UHMWPE), polypropylene (PP), ethylene/propylene copolymer (EPR), ethylene/butene copolymer (EBR), ethylene/vinyl acetate copolymer (EVA), ethylene/vinyl acetate copolymer saponified product (EVOH), ethylene/acrylic acid copolymer (EAA), ethylene/methacrylic acid copolymer (EMAA), ethylene/methyl acrylate copolymer (EMA), ethylene/methyl methacrylate copolymer (EMMA) and ethylene/ethyl acrylate copolymer (EEA); the above-described polyolefin-based resin modified with a compound containing a functional group, for example, a carboxyl group such as acrylic acid, methacrylic acid, maleic acid, fumaric acid, itaconic acid, crotonic acid, mesaconic acid, citraconic acid, glutaconic acid, cis-4-cyclohexene-1,2-dicarboxylic acid and endobicyclo[2.2.1]-5-heptene-2,3-dicarboxylic acid, a metal salt thereof (Na, Zn, K, Ca, Mg), an acid anhydride group such as maleic anhydride, itaconic anhydride, citraconic anhydride and endabicyclo-[2.2.1]-5-heptene-2,3-dicarbonic acid anhydride, or an epoxy group such as glycidyl acrylate, glycidyl methacrylate, glycidyl ethacrylate, glycidyl itaconate and glycidyl citraconate; a polyester-based resin such as polybutylene terephthalate (PBT), polyethylene terephthalate (PET), polyethylene isophthalate (PEI), PET/PEI copolymer, polyarylate (PAR), polybutylene naphthalate (PBN), polyethylene naphthalate (PEN) and liquid crystal polyester (LCP); a polyether-based resin such as polyacetal (POM) and polyphenylene oxide (PPO); a polysulfone-based resin such as polysulfone (PSF) and polyethersulfone (PES); a polythioether-based resin such as polyphenylene sulfide (PPS) and polythioether sulfone (PTES); a polyketone-based resin such as polyether ether ketone (PEEK) and polyallyl ether ketone (PAEK); a polynitrile-based resin such as polyacrylonitrile (PAN), polymethacrylonitrile, acrylonitrile/styrene copolymer (AS), methacrylonitrile/styrene copolymer, acrylonitrile/butadiene/styrene copolymer (ABS) and methacrylonitrile/styrene/butadiene copolymer (MBS); a polymethacrylate-based resin such as polymethyl methacrylate (PMMA) and polyethyl methacrylate (PEMA); a polyvinyl ester-based resin such as polyvinyl acetate (PVAc); a polyvinyl-based resin such as polyvinylidene chloride (PVDC), polyvinyl chloride (PVC), vinyl chloride/vinylidene chloride copolymer and vinylidene chloride/methyl acrylate copolymer; a cellulose-based resin such as cellulose acetate and cellulose butyrate; a polycarbonate-based resin such as polycarbonate (PC); a polyimide-based resin such as thermoplastic polyimide (PI), polyamideimide (PAI) and polyetherimide; a fluorine-based resin such as polyvinylidene fluoride (PVDF), polyvinyl fluoride (PVF), ethylene/tetrafluoroethylene copolymer (ETFE), polychlorotrifluoroethylene (PCTFE), ethylene/chlorotrifluoroethylene copolymer (ECTFE), tetrafluoroethylene/hexafluoropropylene copolymer (TFE/HFP, FEP), tetrafluoroethylene/hexafluoropropylene/vinylidene fluoride copolymer (TFE/HFP/VDF, THV) and tetrafluoroethylene/fluoro(alkylvinylether) copolymer (PFA); a thermoplastic polyurethane-based resin; a polyurethane elastomer; a polyester elastomer; and a polyamide elastomer. The above-described polyamide resin specified in the present invention can also be stacked, and in view of the balance of film strength and the gas barrier property, it is preferred to stack a polymetaxylylene adipamide (polyamide MXD6) or a saponified product of ethylene/vinyl acetate copolymer (EVOH).

In the polyamide film composed of the polyamide resin composition for a film of the present invention, from the standpoint of imparting a heat-sealing property, a sealant layer is preferably provided. The material used as the sealant layer may be sufficient if it is a heat-sealable resin, and examples of the material used in general include a polyolefin-based resin and a polyester-based resin, with a polyolefin-based resin being preferred. Specific preferred examples thereof include polypropylene (PP), a low-density polyethylene (LDPE), linear low-density polyethylene (LLDPE), an ethylene/vinyl acetate copolymer (EVA), an ethylene/acrylic acid copolymer (EAA), an ethylene/methacrylic acid copolymer (EMAA), an ethylene/methyl acrylate copolymer (EMA), an ethylene/methyl methacrylate copolymer (EMMA), an ethylene/ethyl acrylate copolymer (EEA), an ionomer resin and an amorphous polyester (A-PET).

Furthermore, an unstretched or uniaxially or biaxially stretched thermoplastic resin film or sheet or an arbitrary base material other than a thermoplastic resin, such as paper, a metal-based material, a woven fabric, a nonwoven fabric, metal cotton and wood, may also be stacked. Examples of the metal-based material include a metal or metal compound, such as aluminum, iron, copper, nickel, gold, silver, titanium, molybdenum, magnesium, manganese, lead, tin, chromium, beryllium, tungsten and cobalt, an alloy steel such as stainless steel made of two or more kinds of these metals or metal compounds, and alloys such as aluminum alloy, copper alloy (e.g., brass, bronze) and nickel alloy.

The thickness of the polyamide film composed of the polyamide resin composition for film of the present invention may be appropriately determined according to the usage and is not particularly limited, but when the thickness of the polyamide film is large, the strength of the polyamide film is enhanced but the transparency or pinhole resistance deteriorates. Accordingly, considering these facts, in the case of a polyamide single-layer film, the thickness is preferably from 5 to 100 µm, more preferably from 10 to 80 µm, still more preferably from 10 to 60 µm. Also, in the case of a laminate film, the thickness is, in terms of the thickness of the layer composed of the polyamide resin composition for film, preferably from 2 to 100 µm, more preferably from 3 to 80 µm, still more preferably from 5 to 60 µm.

The polyamide film composed of the polyamide resin composition for a film of the present invention is excellent in the transparency, slipperiness and printability while maintaining various properties inherent in the polyamide resin and ensures good continuous productivity with little rupture on stretching. In particular, thanks to the combination use of (A) an inorganic filler particle surface-treated with an organopolysiloxane and (B) a magnesium salt of a hydroxy fatty acid, the film can maintain its transparency and printability and at the same time, exhibit excellent rupture resistance when stretching. Accordingly, a film excellent in the transparency, slipperiness and printability can be stably produced over a long period of time by minimizing the trouble during the film-forming operation, such as rupture on stretching.

### EXAMPLES

The present invention is described in greater detail below by referring to Examples and Comparative Example, but as long as the gist of the present invention is observed, the present invention is not limited to the following Examples, Various evaluation methods and inorganic filler particles used are described below.

### [Transparency]

The haze was measured in accordance with ASTM D-1003 by using a direct-reading haze computer (HGM-2DP) manufactured by Suga Test Instruments Co., Ltd. When the haze value was 3.0% or less, the film was judged as being excellent in the transparency.

### [Slipperiness]

The dynamic coefficient of friction of a film/other party material film was measured at 23°C and 60% RH in accordance with ASTM D-1894. The measurement was performed 5 times, and the average thereof was determined. When the dynamic coefficient of friction was 0.4 or less, the film was judges as being excellent in the slipperiness.

### [Printability]

The wetting index was measured in accordance with JIS K-6768. When the wetting index was 35 mN/m or more, the film was judged as being excellent in the printability.

### [Continuous Productivity]

The raw material resin composition was melted at an extrusion temperature of 280°C in a 40 mm-diameter extruder equipped with a circular die and then withdrawn while cooling with water at 20°C to continuously produce an unstretched film. Subsequently, the film was stretched at a stretch ratio (in both machine and transverse directions) of 3.0 times at a stretching temperature of 180°C by a tubular stretching method of stretching the film in the machine and transverse directions at the same time by inflation under pressure of a gas. The operation was continued for 24 hours, and the number of rupture occurrences in the stretching step was recorded. When the number of rupture occurrences was 3 or less in 24 hours, the film was judged as being excellent in the continuous productivity.

### [Inorganic Filler Particle Used]

(A) Inorganic filler particle surface-treated with an organopolysiloxane
   (A-1) Silica surface-treated with an organopolysiloxane (Mizukasil PM-363, produced by Mizusawa Industrial Chemicals, Ltd., average particle diameter: 4.0 µm, treating amount with the organopolysiloxane: 10 mass% based on silica)
(B) Magnesium salt of a hydroxy fatty acid.
   (B-1) Magnesium 12-hydroxystearate (EM644, produced by Katsuta Kako K.K.)
   (B-2) Magnesium 12-hydroxybehenate
   (B-3) Magnesium stearate (Ko Magnesium Stearate, produced by NOF Corp.)
   (B-4) Calcium 12-hydroxystearate (Calcium Castor Stearate, produced by NOF Corp.)
(C) Inorganic filler particle having a specific surface area of 200 m²/g or less
   (C-1) An aqueous solution prepared by 6-fold diluting 90 mass% of zeolite (Silton AMT-25, produced by Mizusawa Industrial Chemicals, Ltd., average particle diameter: about 2.5 µm, specific surface area: 3 m²/g) and 10 mass% of γ-aminopropyltriethoxysilane (A1100, produced by Nippon Unicar Co., Ltd.) with water was mixed in a super mixer under heating at 80°C, thereby performing the treatment while evaporating water. Subsequently, the particle was dried at 120°C to obtain surface-treated zeolite (C-1).
   (C-2) An aqueous solution prepared by 6-fold diluting 95 mass% of silica (Mizukasil P527, produced by Mizusawa Industrial Chemicals, Ltd., average particle diameter: about 1.5 µm, specific surface area: 55 m²/g) and 5 mass% of γ-aminopropyltriethoxysilane (A1100, produced by Nippon Unicar Co., Ltd.) with water was mixed in a super mixer under heating at 80°C, thereby performing the treatment while evaporating water. Subsequently, the particle was dried at 120°C to obtain surface-treated silica (C-2).
   (C-3) An aqueous solution prepared by 6-fold diluting 95 mass% of silica (Mizukasil P707, produced by Mizusawa Industrial Chemicals, Ltd., average particle diameter: about 2.2 µm, specific surface area: 300 m²/g) and 5 mass% of γ-aminopropyltriethoxysilane (A1100, produced by Nippon Unicar Co., Ltd.) with water was mixed in a super mixer under heating at 80°C, thereby performing the treatment while evaporating water. Subsequently, the particle was dried at 120°C to obtain surface-treated silica (C-3).

### Example 1

A pressure-resistant reaction vessel equipped with a stirrer and having an inner volume of 70 liter was charged with 10 kg of ε-caprolactam, 1 kg of water and 15.0 g of (A) silica (A-1) surface-treated with an organopolysiloxane and heated at 100°C, and the contents were stirred until the inside of the reaction system reached the uniform state at this temperature. Subsequently, the temperature was further raised to 260°C, and the system was stirred for 1 hour under pressure of 2.0 MPa. Thereafter, the pressure was discharged and while vaporizing the water content from the reaction vessel, the polymerization reaction was allowed to proceed at 260°C for 2 hours under atmospheric pressure. Furthermore, the polymerization reaction was allowed to proceed at 260°C for 2 hours under reduced pressure of 53 kPa. After the completion of reaction, the reaction product taken out as a strand from the bottom nozzle of the reaction vessel was cooled by introducing it into a quenching bath and cut to obtain a polyamide resin pellet in which silica was uniformly dispersed. This pellet was dipped in hot water to remove by extraction about 10% of unreacted monomer and then dried under reduced pressure. The relative viscosity of the obtained polymer (polyamide resin) was 3.4.

Next, a composition prepared by blending 0.03 parts by mass of (B) magnesium 12-hydroxystarate (B-1) and 0.08 parts by mass of (D) ethylene bis-stearylamide per 100 parts by mass of the polyamide pellet in a cylindrical mixer was melt at an extrusion temperature of 260°C by using a 40 mm-diameter single full-flight screw extruder equipped with a circular die and withdrawn while cooling with water at 20°C to obtain a substantially amorphous unoriented unstretched tubular polyamide film. Subsequently, the film was stretched at a stretch ratio (in both machine and transverse directions) of 3.0 times at a stretching temperature of 180°C by a tubular stretching method of stretching the film in the machine and transverse directions at the same time by inflation under pressure of a gas. Thereafter, the tubular film was cut open, and the flat film was introduced into a tenter and subjected to a heat-set treatment at 210°C while applying a relaxing treatment in the transverse direction. Both ends of the film were unclipped and after trimming the edges, the film was taken up to obtain a 15 µm-thick biaxially stretched polyamide film. Measurement results of the physical properties of the biaxially stretched polyamide film obtained are shown in Table 1. Also, the result when the continuous productivity was examined by the method above is shown in Table 1.

### Example 2

A biaxially stretched polyamide film was obtained by the same method as in Example 1 except that (C) zeolite (C-1) was blended in the ratio shown in Table 1 together with (A) silica (A-1) in Example 1. Measurement results of the physical properties of the biaxially stretched polyamide film obtained are shown in Table 1. Also, the result when the continuous productivity was examined by the method above is shown in Table 1.

### Example 3

A biaxially stretched polyamide film was obtained by the same method as in Example 2 except that the blending amount of (B) magnesium 12-hydroxystearate (B-1) was changed to the amount shown in Table 1 in Example 2. Measurement results of the physical properties of the biaxially stretched polyamide film obtained are shown in Table 1. Also, the result when the continuous productivity was examined by the method above is shown in Table 1.

### Example 4

A biaxially stretched polyamide film was obtained by the same method as in Example 2 except that the (B) magnesium 12-hydroxystearate (B-1) was changed to magnesium 12-hydroxybehenate (B-2) in Example 2. Measurement results of the physical properties of the biaxially stretched polyamide film obtained are shown in Table 1. Also, the result when the continuous productivity was examined by the method above is shown in Table 1.

### Examples 5 and 6

Biaxially stretched polyamide films were obtained by the same method as in Example 2 except that the blending amounts of (A) silica (A-1) and (C) zeolite (C-1) were changed to the amounts shown in Table 1 in Example 2. Measurement results of the physical properties of the biaxially stretched polyamide film obtained are shown in Table 1. Also, the result when the continuous productivity was examined by the method above is shown in Table 1.

### Example 7

A biaxially stretched polyamide film was obtained by the same method as in Example 2 except that (C) zeolite (C-1) was changed to silica (C-2) in Example 2. Measurement results of the physical properties of the biaxially stretched polyamide film obtained are shown in Table 1. Also, the result when the continuous productivity was examined by the method above is shown in Table 1.

### Example 8

A biaxially stretched polyamide film was obtained by the same method as in Example 2 except that (C) zeolite (C-1) was changed to silica (C-3) in Example 2. Measurement results of the physical properties of the biaxially stretched polyamide film obtained are shown in Table 1. Also, the result when the continuous productivity was examined by the method above is shown in Table 1.

### Comparative Example 1

A biaxially stretched polyamide film was obtained by the same method as in Example 1 except that (A) silica (A-1) was not used in Example 1. Measurement results of the physical properties of the biaxially stretched polyamide film obtained are shown in Table 1. Also, the result when the continuous productivity was examined by the method above is shown in Table 1.

### Comparative Example 2

A biaxially stretched polyamide film was obtained by the same method as in Example 1 except that (B) magnesium 12-hydroxystearate (B-1) was not used in Example 1. Measurement results of the physical properties of the biaxially stretched polyamide film obtained are shown in Table 1. Also, the result when the continuous productivity was examined by the method above is shown in Table 1

### Comparative Examples 3 and 4

Biaxially stretched polyamide films were obtained by the same method as in Example 1 except that the blending amount of (B) magnesium 12-hydroxystearate (B-1) was changed to the amount shown in Table 1 in Example 1. Measurement results of the physical properties of the biaxially stretched polyamide film obtained are shown in Table 1. Also, the result when the continuous productivity was examined by the method above is shown in Table 1.

### Comparative Example 5

A biaxially stretched polyamide film was obtained by the same method as in Example 1 except that (B) magnesium 12-hydroxystearate (B-1) was changed to magnesium stearate (B-3) in Example 1. Measurement results of the physical properties of the biaxially stretched polyamide film obtained are shown in Table 1. Also, the result when the continuous productivity was examined by the method above is shown in Table 1.

### Comparative Example 6

A biaxially stretched polyamide film was obtained by the same method as in Example 1 except that (B) magnesium 12-hydroxystearate (B-1) was changed to calcium 12-hydroxystearate (B-4) in Example 1. Measurement results of the physical properties of the biaxially stretched polyamide film obtained are shown in Table 1. Also, the result when the continuous productivity was examined by the method above is shown in Table 1.

### Comparative Example 7

A biaxially stretched polyamide film was obtained by the same method as in Example 1 except that (A) silica (A-1) was changed to (C) silica (C-2) in Example 1. Measurement results of the physical properties of the biaxially stretched polyamide film obtained are shown in Table 1. Also, the result when the continuous productivity was examined by the method above is shown in Table 1.

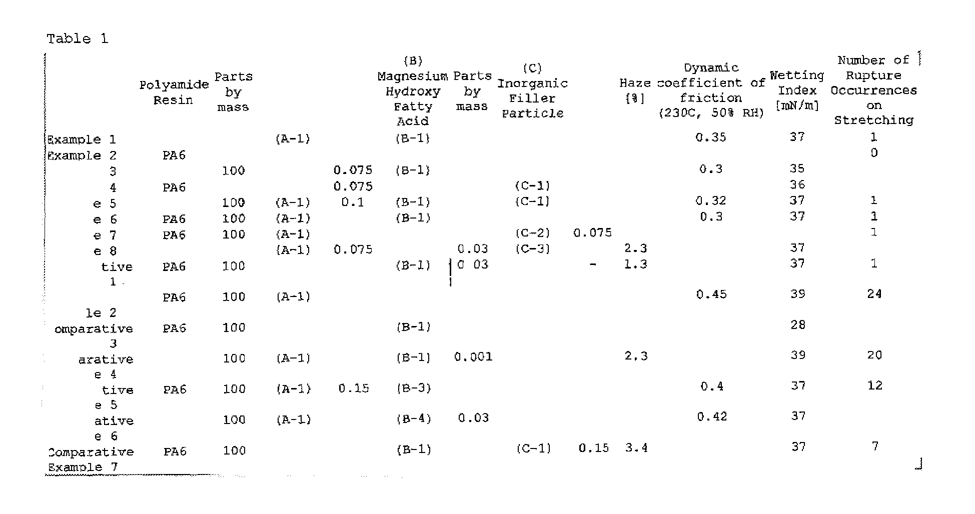

As apparent from Table 1, the slipperiness is poor in Comparative Example 1 using only the component (B), and the number of rupture occurrences on stretching is large in Comparative Example 2 using only the component (A). Even when the components (A) and (B) are used in combination, if the ratio thereof are out of the scope of the present invention, the printability and transparency are poor in Comparative Example 3 where the amount of the component (B) exceeds the specified range, and the number of rupture occurrences on stretching is large and the continuous productivity is low in Comparative Example 4 where the amount of the component (B) used is less than the specified range. In Comparative Examples 5 and 6 where an additive other than the magnesium salt of a hydroxy fatty acid specified in the present invention is used as the component (B), the number of rupture occurrences on stretching is large and the continuous productivity is low. Also, in Comparative Example 7 using an inorganic filler particle other than the inorganic filler particle surface-treated with an organopolysiloxane specified in the present invention, the film transparency is bad, the number of rupture occurrences is large, and the continuous productivity is low.

On the other hand, in Examples 1 to 8 obtained from the composition specified in the present invention, the transparency, slipperiness and printability are excellent and at the same time, the number of rupture occurrences on stretching is small, revealing that a continuous and stable operation over a long period of time is possible.

## Claims

1. A polyamide resin composition for a film, comprising 100 parts by mass of a polyamide resin, from 0.01 to 0.2 parts by mass of (A) an inorganic filler particle surface-treated with an organopolysiloxane and from 0.003 to 0.1 parts by mass of (B) a magnesium salt of a hydroxy fatty acid.

2. The polyamide resin composition for a film as claimed in claim 1, wherein said inorganic filler particle (A) is silica surface-treated with an organopolysiloxane in an amount of 0.5 to 15 parts by mass per 100 parts by mass of the silica.

3. The polyamide resin composition for a film as claimed in claim 1 or 2, wherein (C) an inorganic filler particle other than (A), which is an inorganic filler particle having a specific surface area of 200 m²/g or less, is further blended in an amount of 0.01 to 0.2 parts by mass per 100 parts by mass of the polyamide resin.

4. The polyamide resin composition for a film as claimed in claims 1 to 3, wherein said (C) inorganic filler particle is at least one member selected from the group consisting of silica, kaolin and zeolite.

5. The polyamide resin composition for a film as claimed in claims 1 to 4, wherein (D) a bisamide compound is further blended in an amount of 0.01 to 0.5 parts by mass per 100 parts by mass of the polyamide resin.

6. A polyamide film formed of the polyamide resin composition claimed in any one of claims 1 to 5.

7. A biaxially stretched polyamide film formed of the polyamide resin composition claimed in any one of claims 1 to 5.
